# EUROPEAN PATENT APPLICATION

(11) **EP 1 510 841 A1**
(43) Date of publication of application: **02.03.2005**
(21) Application number: 03730745.1
(22) Date of filing: 02.06.2003
(51) Int. Cl.: G02B 6/22, G02B 6/00

(54) **PHOTONIC CRYSTAL FIBER, METHOD OF MANUFACTURING THE CRYSTAL FIBER, AND METHOD OF CONNECTING THE FIBER**

(30) Priority: 31.05.2002 JP 2002160012
(71) Applicant: Mitsubishi Cable Industries, Ltd., Itami-shi, Hyogo 664-0027 (JP)
(72) Inventor: HACHIWAKA, Masayoshi Itami Works of MITSUBISHI, Itami-shi, Hyogo 664-0027 (JP); YAMAGUCHI, Syunichiro Itami Works of MITSUBISHI, Itami-shi, Hyogo 664-0027 (JP); TANAKA, Masatoshi Itami Works of MITSUBISHI CABLE, Itami-shi, Hyogo 664-0027 (JP); HIGASHIKUBO, Takashi, Saitama-shi, Saitama 331-0047 (JP)
(74) Representative: Laufhütte, Dieter, Dr.-Ing.
(86) International application number: PCT/JP2003/006904
(87) International publication number: WO 2003/102651

(57) **Abstract**

A photonic crystal fiber **(1)** has a fiber body including a core **(2)** and a cladding **(3)** which is provided to surround the core **(2)** and having a plurality of microscopic holes **(3a)** extending along the core **(2).** In the photonic crystal fiber **(1),** the openings of the plurality of microscopic holes **(3a)** of the cladding **(3)** located at an end of the fiber body are closed with blocking element **(5)** having a lower refractive index than the core **(2),** and thereafter the fiber end face is polished.

## Description

### Technical Field

The present invention relates to a photonic crystal fiber having a fiber body including a core and a cladding (porous part) which is provided to surround the core and has a plurality of microscopic holes extending along the core, and a method for fabricating the same, and a method for connecting fibers.

### Background Art

Several types of photonic crystal fibers include a core which is solidly formed at the fiber center, and a cladding which is provided to surround the core and has a plurality of microscopic holes extending along the core. Such a photonic crystal fiber confines light within a core surrounded with a cladding and transmits the light. Since the photonic crystal fiber can freely control wavelength dispersion of light by changing the size of microscopic holes or the distance therebetween, communication in new wavelengths can be realized, which has not been realized by conventional optical fibers, and an increase in communication speed and a reduction in communication cost are expected.

By the way, in connecting this type of photonic crystal fiber to an optical fiber to be connected through connectors, an end face of the photonic crystal fiber is butted and connected to an end face of the optical fiber to be connected. However, if an air layer is provided, in butting the fiber end faces, between one fiber end face and the other, this presents a disadvantage that light reflects at the boundary between the core and the air layer, or a disadvantage that part of the light is lost. Therefore, in order to avoid any gap between both fiber end faces, the fiber end faces are polished. However, for a photonic crystal fiber, its cladding has microscopic holes and polishing agent or polishing dust enters into these microscopic holes during the polishing, causing new problems of generating disadvantages such as deterioration of optical characteristics or obstruction of light transmission due to attachment of the polishing agent or the polishing dust, which comes out from the microscopic holes, to the core.

Moreover, since the distance between the microscopic holes is very narrow, no more than 10 µm or less, there is a further problem that the cladding is cracked or broken up by vibration or shock during the polishing.

Furthermore, when the photonic crystal fiber is left as it is, for example, under a hot and humid environment, light transmission loss may occur due to the invasion of moisture and the like into the microscopic holes.

### Disclosure of the Invention

It is an object of the present invention to prevent polishing agent or polishing dust from entering into microscopic holes of a cladding during polishing an end face of a photonic crystal fiber.

A photonic crystal fiber of the present invention including a fiber body having a core and a cladding which is provided to surround the core and has a plurality of microscopic holes extending along the core, wherein the openings of the microscopic holes of the cladding located at an end of the fiber body are closed with blocking element having a lower refractive index than the core, and thereafter the fiber end face is polished.

According to the above structure, since the openings of the microscopic holes are closed with the blocking element in advance before the fiber end face is polished, polishing agent, polishing dust or the like does not enter into the microscopic holes during the polishing of the fiber end face. As a result, it is possible to prevent that the polishing agent, the polishing dust or the like in the microscopic holes deteriorates optical characteristics, and that the polishing agent, the polishing dust or the like coming out from the microscopic holes interferes with light transmission by attaching to the core.

Moreover, since the refractive index of the blocking element used here is lower than that of the core, light is transmitted in the core without leaking outside at the boundary between the core and the cladding.

Since the blocking element closing the openings relieves vibration and shock during the polishing, it is prevented that cracks and breakage occur between the microscopic holes in the cladding of the fiber end face.

Furthermore, since the openings of the microscopic holes are closed with the blocking element in accordance with the aforementioned method, invasion of moisture and the like, which causes light transmission loss, is prevented.

In the photonic crystal fiber of the present invention, the hardness of the blocking element may be lower than that of the fiber body.

If the hardness of the blocking element is greater than that of the fiber body, the blocking element is ground away less than the fiber body during the polishing and the fiber body is more easily ground away than the blocking element. As a result, the blocking element may remain protruding beyond the fiber end face, which may interfere with the connection to the other optical fiber. On the other hand, with the aforementioned structure, the blocking element having a lower hardness than the fiber body is used. Since, therefore, the blocking element is easily scraped into the microscopic holes during the polishing, it is prevented that the blocking element remains protruding beyond the fiber end face.

In the photonic crystal fiber of the present invention, the blocking element may be scraped into the microscopic holes by polishing the fiber end face.

According to the above structure, since the blocking element is scraped into the microscopic holes by polishing the fiber end face, it is possible to connect the photonic crystal fiber to the other optical fiber without any obstruction.

In the photonic crystal fiber of the present invention, the plurality of microscopic holes of the cladding may constitute a triangular grid in the fiber cross section.

In the photonic crystal fiber of the present invention, the plurality of microscopic holes of the cladding may be arranged to form a plurality of layers concentrically about the core in the fiber cross section.

According to these structures, since the distance between the microscopic holes is narrow, the effects of the blocking element in preventing the occurrence of crack and breakage are more significantly achieved.

A method for fabricating a photonic crystal fiber of the present invention is directed to a photonic crystal fiber having a fiber body including a core and a cladding which is provided to surround the core and has a plurality of microscopic holes extending along the core, and includes the step of closing the openings of the microscopic holes of the cladding located at an end of the fiber body with blocking element having a lower refractive index than the core, and thereafter polishing the fiber end face.

According to the above method, since the openings of the microscopic holes are closed with the blocking element in advance before the fiber end face is polished, polishing agent, polishing dust or the like does not enter into the microscopic holes during the polishing of the fiber end face. As a result, it is prevented that the polishing agent, the polishing dust or the like in the microscopic holes deteriorates optical characteristics, and that the polishing agent, the polishing dust or the like coming out from the microscopic holes interferes with light transmission by attaching to the core.

Moreover, since the refractive index of the blocking element used here is lower than that of the core, light is not lost from the core to outside, and moreover the optical characteristics of the fiber are not affected.

Moreover, since the blocking element closing the openings relieves vibration and shock during the polishing, it is prevented that cracks and breakage occur between the microscopic holes in the cladding of the fiber end face.

Furthermore, since the openings of the microscopic holes are closed with the blocking element in accordance with the aforementioned method, invasion of moisture and the like into the microscopic holes can be prevented.

A method for connecting fibers of the present invention is a method for connecting a photonic crystal fiber to an optical fiber to be connected, the photonic crystal fiber having a fiber body including a core and a cladding which is provided to surround the core and has a plurality of microscopic holes extending along the core, and includes the step of closing the openings of the microscopic holes of the cladding located at an end of the fiber body with blocking element having a lower refractive index than the core and lower hardness than the fiber body, and thereafter polishing the fiber end face, and butting the polished fiber end face to an end face of the optical fiber to be connected.

According to the above method for connecting fibers, it is possible to contact the end face of the photonic crystal fiber to the end face of the optical fiber to be connected without interposing any obstacles therebetween. As a result, it is possible to transmit light in confinement within the core without loss. That is, by closing the openings of the microscopic holes with the blocking element in advance before polishing the fiber end face of the photonic crystal fiber, polishing agent, polishing dust or the like can be prevented from entering into the microscopic holes during the polishing of the fiber end face. As a result, it is prevented that the polishing agent, the polishing dust or the like in the microscopic holes deteriorates optical characteristics, and that the polishing agent, the polishing dust or the like coming out from the microscopic holes interferes with light transmission by attaching to the core.

Moreover, since the refractive index of the blocking element used here is lower than that of the core, light is not lost from the core to outside, and moreover the optical characteristics of the fiber are not affected.

Since the blocking element closing the openings relieves vibration and shock during the polishing, the damage to the fiber can be prevented.

Furthermore, since the openings of the microscopic holes are closed with the blocking element in accordance with the aforementioned method, moisture and the like, which would cause light transmission loss if entering into the microscopic holes, are prevented from entering thereinto.

In the case of blocking element having a greater hardness than the fiber body, the fiber end is more easily ground away than the blocking element during the polishing, so that the blocking element may remain protruding beyond the fiber end face. In such an event, the protruded blocking element may prevent the end face of the photonic crystal fiber and the end face of the optical fiber to be connected from contacting each other. On the other hand, in the case of blocking element having a lower hardness than the fiber body, since the blocking element is easily scraped from the fiber end into the microscopic holes during the polishing, it is possible to contact the end face of the photonic crystal fiber and the end face of the optical fiber to be connected without any obstruction, and light transmission loss can be prevented.

### Brief Description of Drawings

Fig. 1 is a perspective view of a photonic crystal fiber in accordance with a first embodiment;
Figs. 2A-2D are cross-sectional views taken along line II-II of Fig. 1 in fabricating processes of the photonic crystal fiber;
Fig. 3 is a cross-sectional view taken along line II-II of Fig. 1 and corresponding to the case where the microscopic holes are closed with blocking element having a lower hardness than the fiber body and the fiber end faces are then polished;
Fig. 4 is a cross-sectional view taken along line II-II of Fig. 1 and corresponding to the case where the microscopic holes are closed with blocking element having a greater hardness than the fiber body and the fiber end faces are then polished;
Fig. 5 is a view illustrating a first connection structure between the photonic crystal fiber and an optical fiber to be connected; and
Fig. 6 is a view illustrating a second connection structure between the photonic crystal fiber and the optical fiber to be connected.

### Best Mode for Carrying Out the Invention

Hereinafter, referring to the drawings, an embodiment in accordance with the present invention will be described. Note that the present invention is not limited to the following embodiment.

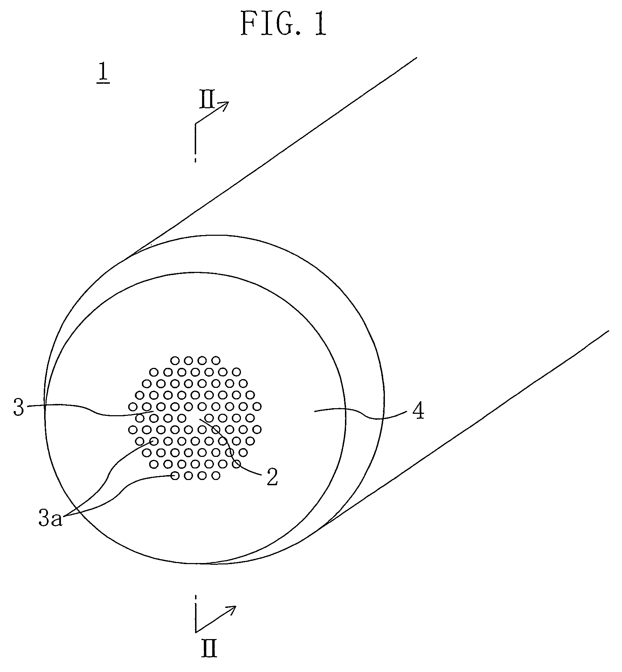

Fig. 1 shows an end of a photonic crystal fiber **1** of an embodiment in accordance with the present invention.

This photonic crystal fiber **1** is made from silica, plastic or the like, and includes a core **2** forming the center of the fiber, a cladding **3** which is provided to surround the core **2,** and an outermost layer **4** which is provided to surround the cladding **3.**

The core **2** is solidly formed and may be doped with a functional substance such as germanium (Ge). A light signal is transmitted through this core **2** along its longitudinal direction.

The cladding **3** constitutes a porous part in which a plurality of microscopic holes **3a** extending along the core **2** are formed. The plurality of microscopic holes **3a** constitute a triangular grid in the cross-section of the fiber and are arranged to form a plurality of layers concentrically about the core **2,** which forms a photonic crystal structure in the radial direction of the fiber. The light signal is confined within the core **2** by the cladding **3.**

Such a photonic crystal fiber **1** is fabricated as follows.

First, a preform is prepared by filling a cylindrical support tube with a plurality of capillaries and a core member. At this time, the core member is adjusted to be placed on the central axis.

Subsequently, the preform is set on a fiber-drawing machine, and then drawn at a high speed while being heated at a high temperature, thereby reducing its diameter (forming it into a fiber).

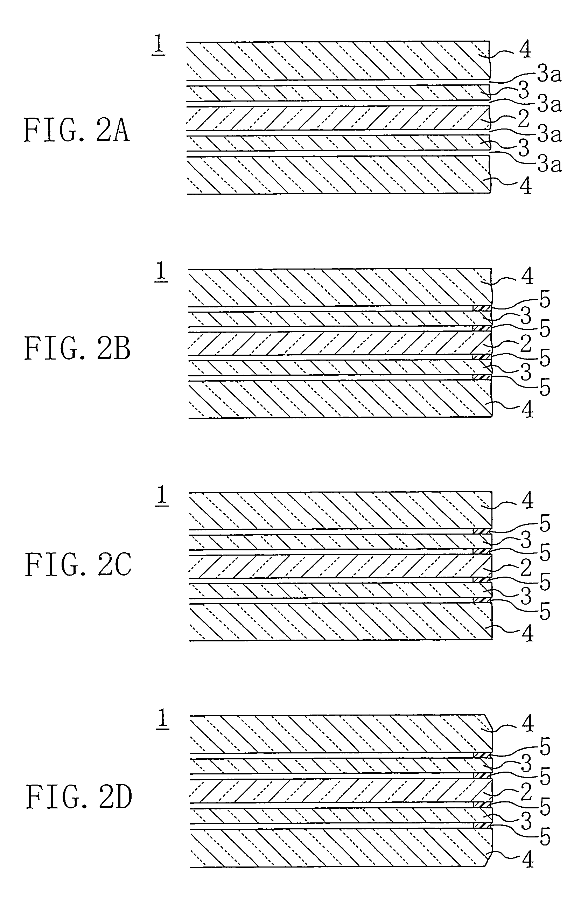

A photonic crystal fiber thus fabricated has, as illustrated in Fig. 2A, an uneven end face.

For such a photonic crystal fiber, as illustrated in Fig. 2B, the microscopic holes 3a in the cladding **3** are first closed with blocking element **5** having a refractive index lower than the core **2** and a lower hardness than the fiber body. For example, in the case where pure silica is used for the core **2,** since the refractive index of pure silica is 1.452, a substance to be used as the blocking element **5** has a lower refractive index than this value. Moreover, in the case where pure silica is used for the core **2,** since the hardness of pure silica is 790 kg/mm² in Vickers test method, the substance to be used as the blocking element 5 also has a lower hardness than this value.

Next, the end face of this photonic crystal fiber is polished using a polishing machine or the like into the face perpendicular to the fiber axis, as illustrated in Fig. 2C.

Next, in order to prevent the outermost layer **4** from interfering with a fiber-to-fiber connection at the fiber end, as illustrated in Fig. 2D, a portion of the outermost layer **4** located at the fiber end is polished into a tapered shape by the polishing machine.

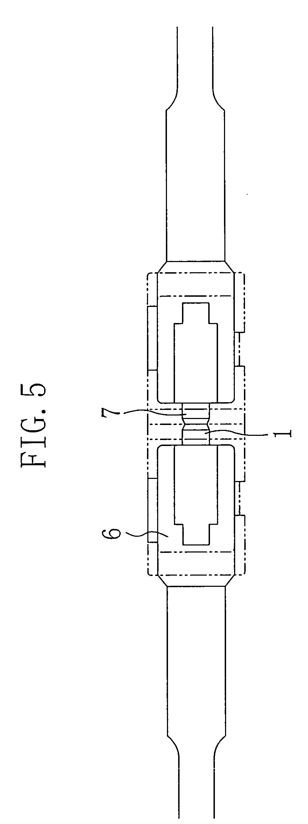

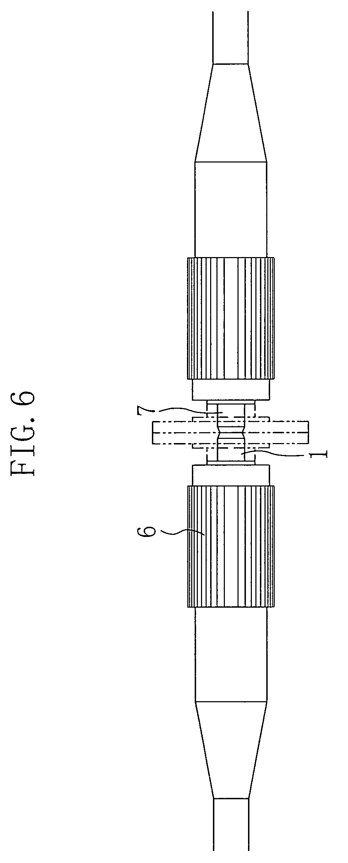

The photonic crystal fiber **1** fabricated in accordance with the aforementioned method is connected, as illustrated in Figs. 5 and 6, to an optical fiber **7** to be connected by butting the end face of the photonic crystal fiber **1** to the end face of the optical fiber within connectors **6** so as not to interpose any obstacles or an air layer therebetween.

In the photonic crystal fiber **1** fabricated in accordance with the aforementioned method, the openings of the microscopic holes **3a** are closed with the blocking element **5** in advance before the fiber end face is polished. As a result, it is prevented that the polishing agent, the polishing dust or the like in the microscopic holes **3a** deteriorates optical characteristics, and that the polishing agent, the polishing dust or the like coming out from the microscopic holes **3a** interferes with light transmission by attaching to the core **2.**

Moreover, since the blocking element **5** closing the openings of the microscopic holes **3a** has a lower refractive index than the core **2,** it allows light to be transmitted in confinement within the core **2,** and does not affect the optical characteristics of the photonic crystal fiber 1 in actually using it.

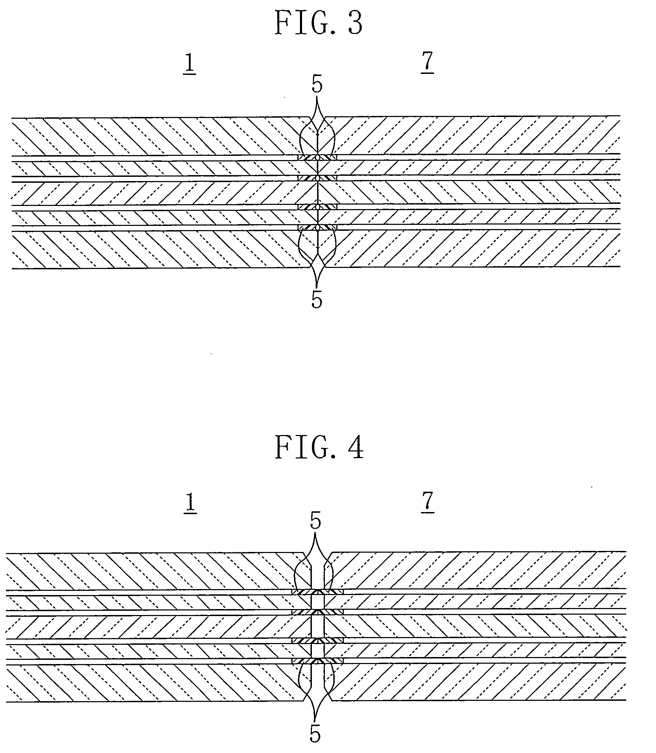

If the hardness of the blocking element **5** is greater than that of the fiber body, as illustrated in Fig. 4, the fiber end face is more easily ground away than the blocking element **5** during the polishing. As a result, the blocking element **5** may protrude beyond the fiber end face in connecting the photonic crystal fiber **1** and the optical fiber **7** to be connected, and the protruded blocking element **5** may prevent the end face of the photonic crystal fiber **1** and the end face of the optical fiber **7** to be connected from contacting each other. On the other hand, in the case of blocking element **5** having a lower hardness than the fiber body, since, as illustrated in Fig. 3, the blocking element **5** is scraped into the microscopic holes **3a,** the fiber end face can be perpendicular to the axial direction. Therefore, it is possible to contact and connect the end face of the photonic crystal fiber **1** and the end face of the optical fiber **7** to be connected so as not to interpose any obstacles or an air layer therebetween.

Moreover, in accordance with the aforementioned connecting method, it is possible to prevent light from leaking outside.

Moreover, since the blocking element **5** relieves vibration and shock caused by the polishing, it is prevented that cracks and breakage occur in the cladding.

Furthermore, it is possible to prevent transmission loss which may be caused by invasion of moisture or the like into the microscopic holes **3a** of the photonic crystal fiber **1**.

### Industrial Applicability

The photonic crystal fiber in accordance with the present invention is suitably applicable to optical communication and the like.

## Claims

1. A photonic crystal fiber comprising a fiber body including a core and a cladding which is provided to surround the core and has a plurality of microscopic holes extending along the core,
wherein the openings of the plurality of microscopic holes of the cladding located at an end of the fiber body are closed with blocking element having a lower refractive index than the core, and thereafter the fiber end face is polished.

2. The photonic crystal fiber according to claim 1, wherein the blocking element has a lower hardness than the fiber body.

3. The photonic crystal fiber according to claim 1, wherein the blocking element is scraped into the plurality of microscopic holes by polishing the fiber end face.

4. The photonic crystal fiber according to claim 1, wherein the plurality of microscopic holes of the cladding constitute a triangular grid in a fiber cross section.

5. The photonic crystal fiber according to claim 1, wherein the plurality of microscopic holes of the cladding are arranged to form a plurality of layers concentrically about the core in a fiber cross section.

6. A method for fabricating a photonic crystal fiber having a fiber body including a core and a cladding which is provided to surround the core and has a plurality of microscopic holes extending along the core, the method comprising the step of closing the openings of the plurality of microscopic holes of the cladding located at an end of the fiber body with blocking element having a lower refractive index than the core, and thereafter polishing the fiber end face.

7. The method for fabricating a photonic crystal fiber according to claim 6, wherein the blocking element has a lower hardness than the fiber body.

8. The method for fabricating a photonic crystal fiber according to claim 6, wherein the blocking element is scraped into the plurality of microscopic holes by polishing the fiber end face.

9. The method for fabricating a photonic crystal fiber according to claim 6, wherein the plurality of microscopic holes of the cladding constitute a triangular grid in a fiber cross section.

10. The method for fabricating a photonic crystal fiber according to claim 6, wherein the plurality of microscopic holes of the cladding are arranged to form a plurality of layers concentrically about the core in a fiber cross section.

11. A method for connecting a photonic crystal fiber to an optical fiber to be connected, the photonic crystal fiber having a fiber body including a core and a cladding which is provided to surround the core and has a plurality of microscopic holes extending along the core, the method comprising the steps of:
closing the openings of the plurality of microscopic holes of the cladding located at an end of the fiber body with blocking element having a lower refractive index than the core, and thereafter polishing the fiber end face; and
butting the polished fiber end face to an end face of the optical fiber to be connected.

12. The method for connecting fibers according to claim 11, wherein the blocking element has a lower hardness than the fiber body.

13. The method for connecting fibers according to claim 11, wherein the blocking element is scraped into the plurality of microscopic holes by polishing the fiber end face.

14. The method for connecting fibers according to claim 11, wherein the plurality of microscopic holes of the cladding constitute a triangular grid in a fiber cross section.

15. The method for connecting fibers according to claim 11, wherein the plurality of microscopic holes of the cladding are arranged to form a plurality of layers concentrically about the core in a fiber cross section.
